# EUROPEAN PATENT SPECIFICATION

(11) **EP 4 058 305 B1**
(45) Date of publication and mention of the grant of the patent: **15.05.2024**
(21) Application number: 20807516.8
(22) Date of filing: 12.11.2020
(51) Int. Cl.: B60C 15/06, B60C 9/14

(54) **MOTORCYCLE WHEEL TYRE**
MOTORRADREIFEN
PNEU DE MOTOCYCLETTE

(30) Priority: 15.11.2019 IT 201900021279
(43) Date of publication of application: 21.09.2022
(73) Proprietor: Pirelli Tyre S.p.A., 20126 Milano (IT)
(72) Inventor: BONACCORSI, Giuliano, 20126 Milano (IT); BRUSCHELLI, Luca, 20126 Milano (IT); FORCONI, Nicola, 62012 Civitanova Marche (Macerata) (IT); TORCHIANA, Matteo, 20126 Milano (IT)
(74) Representative: Porta & Consulenti Associati S.p.A.
(86) International application number: PCT/IB2020/060639
(87) International publication number: WO 2021/094961

(56) References cited:
- EP-A1- 0 483 710
- EP-A1- 0 928 704
- EP-A1- 3 199 377
- JP-A- 2005 153 591
- JP-A- 2010 105 423

## Description

The present invention relates to a motorcycle wheel tyre.

Preferably, such a tyre is intended to be used on the front wheels of motorcycles and will be identified hereinafter with the term "front tyre".

Preferably, the motorcycles intended to be equipped with the aforementioned tyre are of the "Sport Touring" type, i.e. sports motorcycles intended to offer high performance in terms of power, comfort and mileage, designed to be used on different types of routes and with different load and road surface conditions. Typically, Sport Touring motorcycles are motorcycles with large piston displacement (for example 800 cm³ or more), and/or high power (for example 100-120 horsepower or more).

The tyre of the invention can, however, be mounted on the front wheels of other types of motorcycles, like for example those of the categories supersport, hypersport, racing street (race imitation), custom touring.

### PRIOR ART

Tyres for front wheels of Sport Touring motorcycles are for example described in the following patent applications in the name of the Applicant: WO 2010/073280, WO 2011/080566, WO 2011/012980.

US 2015/0251501, to the same Applicant, describes a tyre for high-performance two or four-wheeled vehicle wheels, comprising a carcass structure including at least one carcass ply having opposite end edges associated with respective bead cores. At least one anti-abrasion strip is applied in an outer position with respect to the respective bead core. The anti-abrasion strip comprises an elastomeric material obtained through cross-linking of a cross-linkable elastomeric composition including inorganic fibers of aluminum and/or magnesium silicate.

JP 2005153591A discloses a motorcycle tyre for rough comprising, inter alia, a reinforcing layer arranged between the carcass and the sidewalls. This reinforcing layer is composed of a rubber composition containing short fibers oriented at an angle of within 20 with respect to the tyre circumferential direction.

Reinforcing layers arranged between the carcass and the sidewalls at the bead regions of a tyre are also discloses in EP 0483710A1, EP 0928704A1, JP 2010105423A and EP 3199377A1. All these reinforcing layers include fibers which are tilted with respect to the tyre circumferential direction.

### SUMMARY OF THE INVENTION

Hereinafter, when reference is made to any range of values comprised between a minimum value and a maximum value, the aforementioned minimum and maximum values are included in the aforementioned range, unless expressly stated to the contrary.

Moreover, all of the ranges include any combination of the maximum and minimum values described and include any intermediate range, even if not expressly described specifically.

Any numerical value is intended to be preceded by the term "about" to also indicate any numerical value that slightly diverges from the one described, for example to take into account the dimensional tolerances typical of the field of reference.

For the purposes of the present invention the following definitions apply.

The term "motorcycle wheel tyre" is used to indicate a tyre having a high curvature ratio (typically greater than 0.20) and capable of reaching high camber angles during cornering.

The term "camber angle" is used to indicate the angle comprised between the vertical and the equatorial plane of the tyre mounted on the wheel of the motorcycle, during use.

The term "equatorial plane" of the tyre is used to indicate a plane perpendicular to the rotation axis of the tyre and that divides the tyre into two equal parts.

The term "curvature ratio" is used to indicate the ratio between the distance comprised between the radially highest point of the tread band and the maximum width of radial section (also called "maximum cord") of the tyre, and the same maximum width of the tyre, in a cross section thereof. The tyres for front wheels of Sport Touring motorcycles typically have a curvature ratio smaller than about 0.4, whereas for example the tyres for front wheels of supersport, hypersport or imitation race motorcycles have a curvature ratio greater than about 0.4.

The term "maximum width of radial section" or "maximum cord" is used to indicate the maximum width of the profile of the tyre, i.e. the size of the segment having as extremes the two axially outermost points of the profile of the tread band.

The term "tread pattern" is used to indicate the representation of all of the points of the tread band (grooves included) on a plane perpendicular to the equatorial plane of the tyre and tangent to the maximum diameter of the tyre.

The sizes of angles, and/or linear quantities (distances, widths, lengths, wideness, axial and/or circumferential parts, etc.), and/or surfaces are intended as being referred to the tread pattern as defined above.

The terms "circumferential" direction and "circumferentially" are used to indicate a direction generically oriented according to the rolling direction of the tyre (and thus substantially parallel to the equatorial plane of the tyre).

The terms "axial" direction and "axially" are used to indicate a direction perpendicular to the equatorial plane of the tyre, i.e. a direction parallel to the rotation axis of the tyre, or in any case inclined with respect to the rotation axis of the tyre by an angle lower than or equal to about 10°, preferably lower than or equal to about 5°.

The expressions "axially inner" and "axially outer" indicate a position closer to, and farther from, respectively, the equatorial plane with respect to a reference element. Thus, for example, a first groove is axially outer with respect to a second groove if the axial distance of the first groove from the equatorial plane is greater than that of the second groove.

The term "circumferential extension" of the tyre, or of the tread band or of portions thereof, is used to indicate the development in plan of the radially outermost surface of the tyre, or of the tread band or of portions thereof, on a plane tangent to the tyre.

The expression "module", when referred to a tread band, and in particular to the tread pattern, is used to indicate a tread pattern portion that is repeated identically in sequence along the entire circumferential extension of the tread band itself. The modules, whilst maintaining the same pattern configuration, can however have different circumferential lengths.

With reference to the angle of the grooves of the tread band with respect to the equatorial plane of the tyre, such an angle should be intended for each point of the groove as referring to the angle, comprised in absolute value between 0° and 90°, formed by performing a rotation that, starting from the direction defined, in the tread pattern, by the equatorial plane, proceeds up to the direction tangent to the groove passing through such a point. In the case of a tyre suitable for being mounted on a front wheel of a motorcycle, the aforementioned rotation is deemed to be performed by a vector oriented in the direction of rotation of the tyre.

The term "circumferential groove" is used to indicate a groove that extends in a substantially circumferential direction, i.e. along a direction that, in the circumferential extension of the tread band (and thus in the tread pattern), is parallel to the line defined by the equatorial plane of the tyre or inclined with respect to such a line by an angle lower than or equal to about 2°, preferably lower than or equal to about 1.5°, more preferably lower than or equal to about 1°.

The term "transversal groove" is used to indicate a groove comprising at least one groove portion that, in the circumferential extension of the tread band (and thus in the tread pattern), extends along one or more direction inclined with respect to the line defined by the rotation axis of the tyre by an angle comprised between about 0° and about 80°, more preferably between about 0° and about 75°.

The transversal groove can comprise a plurality of groove portions inclined with respect to one another, each of said groove portions extending along a respective direction inclined with respect to the line defined by the rotation axis of the tyre by an angle comprised between about 0° and about 80°, more preferably between about 0° and about 75°.

The term "void to rubber ratio" is used to indicate the ratio between the total surface of the grooves of a certain annular portion of the tread pattern of the tyre (possibly of the entire tread band or tread pattern) and the surface of the certain portion of tread pattern (possibly of the entire tread band or tread pattern). The void to rubber ratio is intended as being substantially equal to zero if it is lower than or equal to about 2%, preferably lower than or equal to about 1%, even more preferably lower than or equal to about 0.5%.

The term "elastomeric material" is used to indicate a material comprising a vulcanizable natural or synthetic polymer and a reinforcing filler, wherein such a material, at room temperature and after having been subjected to vulcanization, can undergo deformations caused by a force and is capable of quickly and energetically recovering the substantially original shape and size after the elimination of the deforming force (according to the definitions of standard ASTM D1566-11 Standard Terminology Relating To Rubber). The reinforcing filler included in the elastomeric material comprises fibers having nanometric dimensions.

The term "fiber" is used to indicate an elongated element having a length much greater than the diameter (or of the maximum cross section size) measured in each of the cross sections thereof.

The term "nanometric dimensions" is used to indicate dimensions lower than 500 nm.

The term "support structure" of a tyre is used to indicate the assembly comprising the carcass structure and the belt structure.

The term "relaxation length" is used to indicate the distance covered by the tyre before a lateral force reaches 63% of the normal operating value. Such a distance normally is a fraction of the rolling radius of the tyre and provides an indication of the dynamic behavior of the tyre. The lower the relaxation length, the shorter the response time of the tyre to develop a lateral force following the application of a drift angle. The relaxation length is one of the parameters typically measured to evaluate the performance of a tyre in terms of drivability and stability (https://en.wikipedia.org/wiki/Relaxation_length and Motorcycle Dynamics, Cossalter Vittore (2002) - First Edition, pages 54 - 56).

The term "drift rigidity" is used to indicate the derivative of the lateral force generated by the tyre with respect to the drift angle. Such a parameter therefore defines the variation in the lateral force generated by the tyre as the drift angle changes. Therefore, a tyre having a high drift rigidity will be capable of developing high lateral forces even at low values of the drift angle. The value of the drift rigidity is influenced by the rigidity of the structure of the tyre and by the rigidity of the tread band. The drift rigidity is another of the parameters typically measured to evaluate the performance of a tyre in terms of drivability and stability.

Tyres for wheels of Sport Touring motorcycles are required to have a high versatility of use. In particular, they are required to have grip and traction on the road surface so as to allow an optimal power transfer, as well as an adequate braking action, even with a load of two people and on any type of road surface, like for example wet, dry, regular and/or irregular asphalt, and/or routes, like for example urban roads, motorways, mountain roads with a large number of bends.

The aforementioned tyres also required to have comfort, stability, controllability, directionality, high mileage and regular wear.

Among the aforementioned features, particular importance is given, in the specific case of tyres for front wheels, to the water drainage in wet road surface conditions. Indeed, it is essential for the tyre of the front wheel to be capable of ensuring effective water drainage from asphalt, so that the tyre of the rear wheel, going straightaway or tilted on the drained asphalt, can effectively discharge the power and the driving forces to the ground.

In order to satisfy all the purposes discussed above, it is known to form on the tread band of the tyre a plurality of transversal grooves which extend from axially inner annular portions of the tread band up to axially outer annular portions of the tread band.

The Applicant has observed that tyre manufacturers, given the high number of features required to tyres for wheels of Sport Touring motorcycles, such features being often mutually in contrast to each other, have often concentrated their efforts on trying to provide tyres that are optimized in terms of stability, drivability, grip in dry conditions, drainage, mileage and regular wear, sometimes at the expense of the optimization of grip during braking in low or extremely low friction conditions, in particular on wet road surfaces.

However, the Applicant has observed that a sudden and/or unpredictable reduction in grip to the road surface could jeopardize the control of the motorcycle.

The Applicant has thus felt the need to provide a Sport Touring motorcycle wheel tyre having excellent features of stability, drivability (or maneuverability), drainage, grip in dry conditions, mileage and regular wear and that nevertheless allows to improve grip during braking in low or extremely low friction conditions, like for example when traveling on cement, worn or cobbled asphalt, in particular on a wet road surface. The Applicant has found that it is possible to satisfy such a need by providing, in the axially inner portion of the tread band, i.e. in the portion of tread band that is always in contact with the road surface during travel along a straight line and slightly leaning, for example with camber angles lower than about 30°, a pair of circumferential grooves arranged on opposite sides with respect to the equatorial plane of the tyre.

Indeed, the Applicant has verified that the aforementioned circumferential grooves provides the two annular portions of tread band which are separated by each of the circumferential grooves with the ability to move with respect to one another, thereby achieving the desired grip of the tyre on the road surface during braking even in low or extremely low friction conditions and in the presence of water.

The Applicant has also observed that such circumferential grooves contribute to provide the axially inner annular portion of the tread band with a certain degree of yielding, which is useful for achieving the desired comfort.

The Applicant has, however, observed that in all motorcycle wheel tyres, during use, due to the wear of the tread band, which typically is greater at the axially inner portion of the tread band, there is a progressive increase of yielding precisely at such a portion of the tread band. Such an increase of yielding inevitably leads to a reduction of the performance in terms of drivability and stability during travel in a straight line and slightly leaning, particularly in the front tyres.

The Applicant has therefore thought how to contain this inevitable increase in yielding of the front tyre at the end of its lifetime without at the same time penalizing both the behavior of the tyre during braking on wet and/or low friction road surfaces, and comfort, and has surprisingly found that it is possible to achieve such a result by stiffening the structure of the tyre in an area other than the one arranged at the axially inner portion of the tread band.

In particular, the Applicant has found that the use, at the beads of a front tyre, of a reinforcing element made of an elastomeric material having a rigidity in the circumferential direction greater than that in the radial direction produces in the area of the bead an advantageous stiffening in the circumferential direction that, by compensating the reduction of rigidity of the tyre that occurs at the axially inner portion of the tread band in the end of life conditions, provides the tyre with an advantageous reduction of the relaxation length with all other parameters being equal, thereby achieving the desired performance in terms of drivability and stability.

The present invention therefore relates to a motorcycle wheel tyre as recited in claim 1.

Preferably, said tyre is a front tyre.

Advantageously, the provision of a pair of circumferential grooves in the axially inner portion of the tread band and of beads each provided with a respective reinforcing element made of an elastomeric material having a rigidity in the circumferential direction greater than the rigidity in the radial direction, allows to provide for a front tyre having an optimal behavior in terms of drivability and stability, even in end of life conditions, ensuring high grip during braking in low or extremely low friction conditions and without penalizing comfort. Such a front tyre has a preferred application in "Sport Touring" motorcycles.

The tyre of the present invention can comprise one or more of the features indicated hereinafter, taken individually from one another or in combination with one another.

Preferably, the ratio between said rigidity in the circumferential direction and said rigidity in the radial direction is greater than 10%, preferably greater than 15%, more preferably greater than 20%, even more preferably greater than 25%. Hereinafter, such a ratio is also identified with the expression "anisotropy ratio".

Preferably, the ratio between said rigidity in the circumferential direction and said rigidity in the radial direction is lower than 80%, preferably lower than 70%, more preferably lower than 60%, even more preferably lower than 50%.

In preferred embodiments, the ratio between said rigidity in the circumferential direction and said rigidity in the radial direction is comprised between 10% and 80%, preferably between 15% and 70%, more preferably between 20 % and 60%, even more preferably between 25% and 50%, for example equal to 30%.

According to the invention, said reinforcing fibers are oriented along said circumferential direction. The Applicant has found that such an arrangement of the reinforcing fibers in the elastomeric material of the aforementioned reinforcing element makes it possible to obtain the desired anisotropy ratio.

Preferably, said reinforcing fibers comprise inorganic fibers of magnesium and/or aluminum and/or calcium silicate, and/or mixtures thereof.

Preferably, said reinforcing fibers have a diameter lower than or equal to 100 nm, even more preferably lower than or equal to 50 nm.

Preferably, said reinforcing fibers have a diameter greater than or equal to 1 nm, more preferably greater than or equal to 5 nm.

In preferred embodiments, said reinforcing fibers have a diameter comprised between 1 nm and 100 nm, more preferably between 5 nm and 50 nm.

Preferably, said reinforcing fibers have a length lower than or equal to 10 µm, more preferably lower than or equal to 5 µm.

Preferably, said reinforcing fibers have a length greater than or equal to 0.1 µm, more preferably greater than or equal to 0.2 µm.

In preferred embodiments, said reinforcing fibers have a length comprised between 0.1 µm and 10 µm, more preferably between 0.2 µm and 5 µm.

Preferably, said at least one reinforcing element is arranged at least in an axially outer position with respect to the respective annular reinforcing structure. The Applicant has indeed observed that the area of the bead that is subjected to traction due to the yielding of the axially central portion of the tread band is the one arranged in an axially outer position with respect to the annular reinforcing structure and it is therefore advisable for the aforementioned reinforcing element to be arranged at least at such an area.

Preferably, said at least one reinforcing element extends radially up to or close to said tread band. In this way the stiffening effect provided by using the aforementioned reinforcing element is maximized.

Preferably, said at least one reinforcing element extends from said axially outer position to an axially inner position with respect to said respective annular reinforcing structure.

Preferably, said at least one reinforcing element at least partially wraps the respective annular reinforcing structure.

In preferred embodiments, said at least one reinforcing element is arranged at least in an axially outer position corresponding to a first portion of bead configured to be coupled to a rim of a wheel. In other words, the reinforcing element is arranged at least at the portion of bead axially farthest from the equatorial plane of the tyre.

Preferably, said at least one reinforcing element extends from said axially outer position to an axially inner position corresponding to a second portion of bead configured to be coupled to the rim of the wheel. In other words, the reinforcing element extends up to the portion of bead axially closest to the equatorial plane of the tyre.

More preferably, said at least one reinforcing element defines an anti-abrasion element at the bead.

In preferred embodiments thereof, the tread band comprises a plurality of grooves forming a tread pattern which includes a module replicated along said circumferential direction and having a predetermined circumferential length.

Preferably, said circumferential grooves extend in said module along said circumferential direction for at least part of said predetermined circumferential length.

More preferably, each groove of said pair of circumferential grooves extends without interruptions along said circumferential direction.

Preferably, said circumferential grooves define between them a central annular portion of tread band having a void to rubber ratio substantially equal to zero. Such a provision makes it possible to contain both the noise produced by the tyre during the rolling thereof and the wearing of the axially inner portion of the tread band, ensuring a substantial constancy of behavior of the tyre during rolling.

Preferably, said central annular portion has a constant axial width along said circumferential direction.

Preferably, said plurality of grooves comprises a plurality of transversal grooves arranged on opposite sides with respect to the equatorial plane of the tyre.

### BRIEF DESCRIPTION OF THE FIGURES

Further features and advantages of the tyre of the present invention will become clearer from the following detailed description of a preferred embodiment thereof, made with reference to the figures herewith attached solely as a non-limiting example. In such drawings:
- figure 1 shows a radial cross section view of a tyre according to the invention, the section being made according to the line I-I of figure 2;
- figure 2 shows a portion of the development in plan of a portion of the tread band of the tyre of figure 1.

### DETAILED DESCRIPTION OF EMBODIMENTS OF THE INVENTION

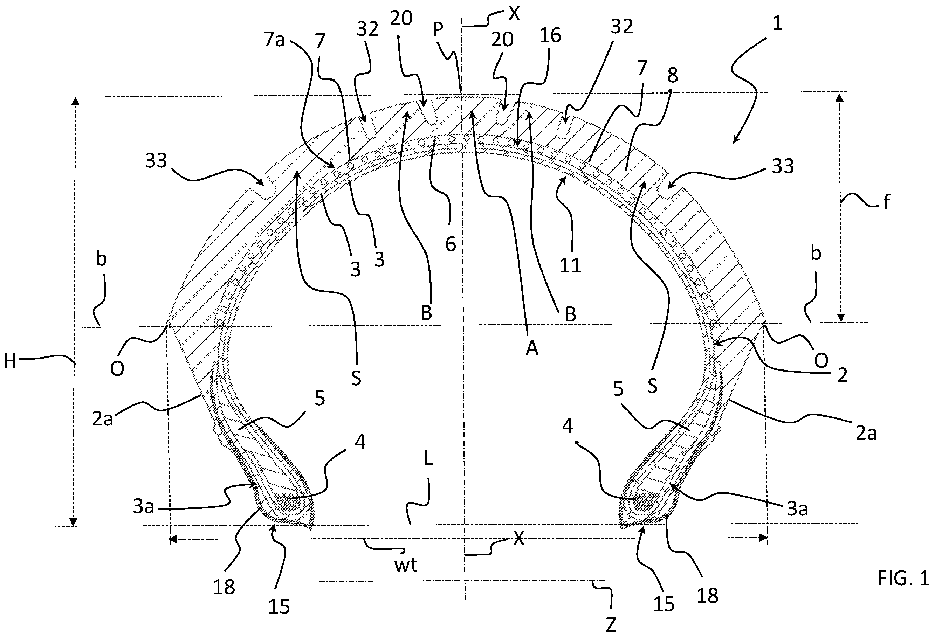

In figure 1, reference numeral 1 wholly indicates a motorcycle wheel tyre according to the present invention. In particular it is a tyre intended to be used on the front wheel of a Sport Touring motorcycle.

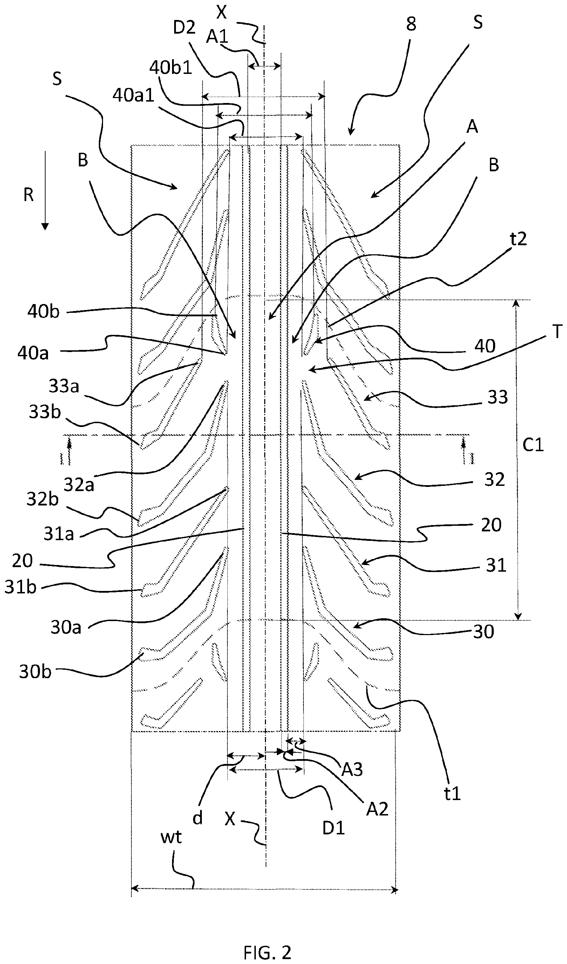

An equatorial plane X-X and a rotation axis Z are defined in the tyre 1. A circumferential direction (perpendicular to the plane of the cross section of figure 1 and indicated in figure 2 with the arrow R oriented in the direction of rotation of the tyre 1) and an axial direction (perpendicular to the equatorial plane X-X in the plane of the cross section of figure 1) are also defined.

The tyre 1 comprises a carcass structure 2 having a central annular crown portion 16 including at least one carcass ply 3 described hereinafter in greater detail.

A belt structure 6 is provided in a radially outer position with respect to the aforementioned carcass structure 2. The belt structure 6 is also described hereinafter in greater detail.

A tread band 8 is provided in a radially outer position with respect to the belt structure 6. By means of the tread band 8 the contact of the tyre 1 with the ground takes place.

The carcass structure 2 is preferably coated, on the inner walls thereof, by a sealing layer 11, or so-called "liner", essentially consisting of a layer of elastomeric material impermeable to air, adapted for providing the tyre with an hermetic seal once it is inflated.

Two carcass plies 3 are provided in the embodiment illustrated in figure 1.

Each carcass ply 3 is preferably made of elastomeric material and comprises a plurality of reinforcing elements (not illustrated) arranged parallel to one another.

The reinforcing elements included in the carcass plies 3 preferably comprise textile cords selected among those usually adopted in the manufacturing of carcasses for tyres, for example nylon, rayon, PET, PEN, Lyocell, each cord comprising elementary wires each having a diameter comprised between 0.35 mm and 1.5 mm or metallic cords made of steel having an elementary wire with a diameter comprised between 0.10 mm and 0.5 mm.

Each carcass ply 3 has its axially opposite end edges 3a turned around respective annular reinforcing structures 4 configured to hold the tyre 1 on a corresponding mounting rim. The annular reinforcing structures 4 are typically called "bead cores".

A tapered elastomeric filler 5 that occupies the space defined between the carcass plies 3 and the corresponding turned end edge 3a of the carcass plies 3 is applied on the outer perimeter edge of the bead cores 4.

In an alternative embodiment, not illustrated, the carcass ply has the opposite lateral edges thereof associated without any turning with particular annular reinforcing structures provided with two metallic annular inserts. In this case, a filler made of elastomeric material can be arranged in an axially outer position with respect to the first annular insert. The second annular insert, on the other hand, is arranged in an axially outer position with respect to the end of the carcass ply. Finally, a further filler ca be provided in an axially outer position with respect to said second annular insert, and not necessarily in contact with it, the further filler ending the manufacturing of the annular reinforcing structure.

The area of the tyre comprising the bead core 4 and the filler 5 forms the so-called "bead", globally indicated in figure 1 with 15, configured to anchor the tyre on a corresponding mounting rim, not illustrated.

The tyre 1 can also comprise a pair of sidewalls 2a applied laterally to the carcass structure 2 on axially opposite sides with respect to the equatorial plane X-X. The sidewalls 2a extend from the tread band 8 to the bead 15 of the tyre 1.

The tyre 1 of the present invention is characterized by a high transversal curvature.

The transversal curvature of a tyre is defined by the particular value of the curvature ratio or "arrow" of the tyre. With reference to figure 1 and in accordance with the definition given above, the curvature ratio is the ratio between the distance f of the radially outermost point P (or top) of the tread band 8 from the line b-b passing through the extremities O of the tread band 8, measured on the equatorial plane X-X, and the distance wt between the extremities O of the tread band 8. In all cases, even when the ends of the tread band are not easily identifiable, for example due to the lack of a precise reference like for example the extremities indicated in figure 1 with O, the size of the maximum cord, or maximum radial section width, of the tyre can be assumed as the distance wt.

The tyre 1 of the present invention preferably has a curvature ratio greater than or equal to 0.3, preferably greater than or equal to 0.35. Such a curvature ratio is in any case lower than 0.4.

As far as the sidewalls 2a are concerned, the tyre 1 of the present invention is preferably a tyre with particularly low sidewalls, i.e. in which the ratio between the distance f and the height H, measured on the equatorial plane X-X between the top P of the tread band 8 and the fitting diameter, identified by the reference line L passing through the beads 15 of the tyre 1, is lower than 0.6, more preferably lower than 0.58, for example equal to 0.55.

Each bead 15 comprises a reinforcing element 18. Such a reinforcing element 18 is preferably associated with an end portion of the sealing layer 11, more preferably so as to project with respect to the latter.

The reinforcing element 18 preferably partially wraps the bead core 4. In particular, in the example illustrated in the figures the reinforcing element 18 extends with continuity from an axially outer position of the bead 15 up to an axially inner position of the bead 15 with reference to the equatorial plane X-X of the tyre 1.

In the aforementioned axially outer position the reinforcing element 18 extends radially for a first segment extending up to or close to the tread band 8.

In the aforementioned axially inner position the reinforcing element 18 extends radially for a second length segment a length shorter than that of the first segment.

The radial length of the second segment can vary between 5% and 60% of the radial length of the first segment.

In the aforementioned axially outer position the reinforcing element 18 corresponds to a first portion of bead 15 configured to be coupled to the rim of the wheel. In the aforementioned axially inner position the reinforcing element 18 corresponds to a second portion of bead 15 configured to be coupled to the rim of the wheel.

The reinforcing element 18 thus defines an anti-abrasion element suitably provided in the tyre 1 at the bead 15.

The reinforcing element 18 is made of an elastomeric material having a rigidity in a circumferential direction greater than the rigidity in a radial direction.

Preferably, the ratio between said rigidity in the circumferential direction and said rigidity in the radial direction is greater than 10%, preferably greater than 15%, more preferably greater than 20%.

The elastomeric material of the reinforcing element 18 comprises a plurality of reinforcing fibers oriented in the circumferential direction. Such reinforcing fibers preferably comprise inorganic fibers of magnesium and/or aluminum and/or calcium silicates, and/or mixtures thereof, having nanometric dimensions.

Examples of suitable fibers of silicates are fibers of sepiolite, fibers of palygorskite (also known as attapulgite), fibers of alloisite, fibers of wollastonite, possibly organically modified, and mixtures thereof. Fibers of sepiolite and alloisite, possibly organically modified, and mixtures thereof are particularly preferred.

Preferably, the aforementioned reinforcing fibers have a diameter comprised between 1 nm and 100 nm, more preferably between 5 nm and 50 nm and a length comprised between 0.1 µm and 10 µm, more preferably between 0.2 µm and 5 µm.

In particular, said reinforcing fibers have an aspect ratio, i.e. a ratio between the length and the diameter, of at least 2:1, preferably at least 3:1, more preferably at least 5:1.

Preferably, the fibers have an aspect ratio not greater than 1000:1, more preferably not greater than 100:1.

Preferably, said aspect ratio is evaluated by microscope observation, preferably carried out on at least one hundred fibers.

Preferably, at least 70%, 80%, 90% of the fibers have the aforementioned aspect ratio.

Preferably, at the end of the possible modification process at least 50%, 60%, 70%, 80% or 90% of the modified fibers maintain their aspect ratio as defined previously.

In a first embodiment of the process, the fibers of silicates are preferably fibers of silicates comprising magnesium, like for example fibers of sepiolite, fibers of palygorskite (also known as attapulgite), possibly organically modified, or mixtures thereof.

Generally, the fibers of silicates, in particular the natural fibers of sepiolite, originally comprise from 12.5% to 15.5% of magnesium with respect to the weight of the same fibers. Fibers of sepiolite originally comprising around 15% of magnesium are particularly preferred.

Examples of fibers of silicates that can be used according to the present invention are the sepiolites Pangel S9 or Pansil 100 or the organically modified sepiolites Pangel B5, Pangel B20, Pangel B40, commercialized by Tolsa Group (http://www.tolsa.com).

Advantageously, the process by which the modified fibers suitable for the present invention are obtained comprises one or more of the following features, taken individually or in combination.

In an embodiment, the preparation process of the modified fibers firstly provides for the suspension of the fibers of silicates with needle-shaped morphology of nanometric dimensions in a suitable liquid medium.

Preferably, said suitable liquid medium is selected among water, alcohols, ethers, ketones and mixtures thereof, more preferably it is selected among water, mono- or poly-alcohols C1-C6 and mixtures thereof, and even more preferably it is water.

Alternatively, the liquid medium can be an alcohol C1-C6, more preferably isopropanol, or a mixture of water and at least one alcohol C1-C6, more preferably water and isopropanol.

Preferably, said liquid medium is used in a volume/weight ratio with respect to the fibers comprised between 2 and 100 ml/g, preferably between 2 and 50 ml/g, more preferably between 4 and 15 ml/g.

Preferably, the suspension of the fibers in the liquid medium is carried out under agitation.

Said suspension can be carried out with different media, for example using a mechanical paddle stirrer, a mechanical mixer, for example of the type used to mix paints or enamels, a magnetic or sonication stirrer.

The process then comprises adding to the suspension, preferably gradually, at least one acidic compound, as described, for example, in WO 2016174629 or in WO 2018078500, or, alternatively, placing the suspension in contact with a precursor compound of amorphous silica, possibly dissolved or suspended in a second liquid medium, as described, for example, in WO 2016174628.

In an embodiment, the elastomeric material is prepared as indicated in Table 1 herein below (the amounts of the various components are indicated in phr).

All of the components, with the exception of sulfur, accelerant (TBBS) and retardant (PVI), were mixed in an internal mixer (model Pomini PL 1,6) for about 5 minutes (1^{st} step). As soon as the temperature reached 145 ± 5°C, the elastomeric composition was discharged. The sulfur, the accelerant (TBBS) and the retardant (PVI) were added and the component were mixed in an open roller mixer (2^{nd} step).

**TABLE 1**

| **1st STEP** | |
|---|---|
| NR | 70,00 |
| BR | 30,00 |
| CB | 45,00 |
| Pangel B5 | 16,00 |
| Silane | 1,00 |
| Stearic acid | 2,00 |
| Zinc oxide | 3,00 |
| 6PPD | 2,40 |

| **2nd STEP** | |
|---|---|
| TBBS | 1,40 |
| PVI | 0,30 |
| Vulcanizer | 2,76 |

| | |
|---|---|
| where: NR: Natural rubber, SMR-GP, Lee Rubber BR: Butadiene rubber, Europrene Neocis^{®}, Polimeri Europa CB: Carbon black, N375, Cabot Pangel B5: Sepiolite modified with quaternary ammonium salt to about 20% by weight (16 phr of Pangel B5 correspond to 13 phr of mineral load), Tolsa Group, fibers having a length comprised between 0.2 µm and 2 µm and diameter comprised between 5 nm and 30 nm Silane: bis[3-(triethoxysilyl)propyl]tetrasulfide, Evonik-Degussa Stearic acid: Sogis Zinc oxide: Zincol Ossidi 6PPD: N(1,3-dimethylbutyl)-N'-phenyl-p-phenylendiamine, Chemtura Corporation TBBS: N-tert-butyl-2-benzothiazolesulfenamide, Vulkacit^{®} NZ/EGC, Lanxess PVI: cyclohexyl-thiophthalimide, Santogard PVI, Flexsys Vulcanizer: Sulfur, Redball Superfine, International Sulphur Inc. | |

The belt structure 6 preferably comprises one or more rubber-coated cords 7, arranged parallel and side-by-side in the axial direction on the crown portion 16 of the carcass structure 2, to form a plurality of turns 7a. Such turns are substantially oriented according to the rolling direction of the tyre 1 (in particular with an angle comprised between 0° and 5° with respect to the equatorial plane X-X), such a direction usually being called "zero degrees". The aforementioned turns preferably extend over the entire crown portion 16 of the carcass structure 2.

Preferably, the belt structure 6 comprises windings of a single cord 7, or of a strip-like element of rubber-coated fabric comprising adjacent cords, preferably up to five, spirally wound from one extremity to the other on the crown portion 16 of the carcass structure 2.

Preferably, such cords 7 are made by steel wires with high carbon content (HT), in other words steel wires with a carbon content greater than 0.9%.

Alternatively, the belt structure 6 can comprise at least two radially juxtaposed layers, each consisting of elastomeric material reinforced with cords arranged parallel to one another. The layers are arranged so that the cords of the first belt layer are oriented obliquely with respect to the equatorial plane of the tyre, whereas the cords of the second layer also have oblique orientation, but symmetrically crossed with respect to the cords of the first layer, to form the so-called "crossed belt".

In this case, generally, the cords 7 of the belt structure 6 are generally textile cords, for example textile cords made of synthetic fiber, for example nylon, rayon, PEN, PET, preferably synthetic fiber with high modulus, in particular aramid synthetic fiber (aromatic polyamide). Alternatively, it is possible to use hybrid cords comprising at least one wire having a low modulus, in other words with a modulus not greater than 15 GPa (for example nylon or rayon), interwoven with at least one wire having a high modulus (for example made of aramid fiber - AR, aromatic polyamide), in other words with a modulus not lower than 25 GPa.

For aramid fibers (AR) the elastic modulus is evaluated according to BISFA - Testing methods for para-aramid fibre yarns, 2002 edition, Determination of the linear density - Chapter 6, Determination of the tensile properties - Chapter 7 - Test procedure - Paragraph 7.5 - with procedure with initial pretensioning.

For the other fibers (nylon, rayon, etc.) the elastic modulus is evaluated according to BISFA - Testing methods for viscose, cupro, acetate, triacetate and lyocell filament yarns - 2007 edition, Determination of tensile properties - Chapter 7 - Tensile test conditions: oven dry test - Table 7.1 - Test procedure - Paragraph 7.5 - With oven dry test on relaxed samples - Subparagraph 7.5.2.4.

In both cases, the cords 7 of the belt structure 6 are textile or metallic cords. Preferably, such cords are made by steel wires having high carbon content (HT), in other words steel wires with a carbon content greater than 0.9%. In the case of use of textile cords, these can be made of synthetic fiber, for example nylon, rayon, PEN, PET, preferably synthetic fiber having a high modulus, in particular synthetic aramid fiber (aromatic polyamides).

The belt structure 6 can also comprise a first support layer substantially consisting of a sheet of elastomeric material interposed between the layer of cords 7 and the carcass ply 3 and on which the turns 7a are wound. Such a layer can extend on a surface having an axial extension substantially corresponding to the surface on which the turns 7a extends. Alternatively, such a layer can extend on a surface smaller than the development surface of the turns 7a, for example only on opposite lateral portions of the belt structure 6.

The belt structure 6 can also comprise an additional layer interposed between the layer of cords 7 and the aforementioned first layer. Such an additional layer can extend on a surface corresponding to the development surface of the belt structure 6. Alternatively, the aforementioned additional layer can extend on a surface smaller than the development surface of the belt structure 6, for example only on opposite lateral portions of the belt structure 6.

In a preferred embodiment of the tyre 1 of the present invention, at least one among the aforementioned first layer and the aforementioned additional layer comprises short aramid fibers, for example made of Kevlar^{®}, dispersed in the elastomeric material.

The tread band 8 has a tread pattern defined by a plurality of grooves formed on the outer surface of the tread band 8 through a molding operation carried out concurrently with the vulcanization of the tyre 1.

The aforementioned grooves overall define on the tread band 8 a void to rubber ratio greater than 8%, for example equal to about 13%.

Preferably, in order to provide the tread band 8 with an adequate rigidity without limiting the drainage capability thereof, the grooves overall define on the tread band 8 a void to rubber ratio lower than 20%, preferably lower than 16%.

As illustrated in figure 2, the tread pattern of the tyre 1 comprises a module T reiteratively replicated along a circumferential direction of the tyre 1. Preferably, the module is reiterated at least ten times along the circumferential extension of the tyre 1, for example twelve times.

In the tyre 1 of the invention the module T corresponds to the portion of tread band 8 that, in the development in plan illustrated in figure 2, is circumferentially delimited by the two dashed lines t1 and t2.

The module has a circumferential length, measured on the equatorial plane X-X and indicated with in figure 1, and an axial length, measured on the development in plan of the tread band 8 or, in other words, on a plane tangent to the tread band 8, which is equal to the length wt of the maximum cord of the tyre 1.

In the tread band 8 it is possible to identify a central annular portion A arranged astride the equatorial plane X-X, a pair of first lateral annular portions B arranged on axially opposite sides with respect to the equatorial plane X-X and in an axially outer position with respect to the central annular portion A, and a pair of second lateral annular portions S arranged on axially opposite sides with respect to the equatorial plane X-X and in an axially outer position with respect to the pair of first lateral annular portions B.

The central annular portion A, the first lateral annular portions B and the axially inner areas of the second lateral annular portions S are defined in an area of the tread band 8 intended to come into contact with the road surface when the motorcycle travels in a straight line or slightly leaning, for example with a camber angle lower than about 30°, whereas the axially outer areas of the second lateral annular portions S are mainly defined in shoulder areas of the tread band 8, i.e. in the areas intended to come into contact with the road surface when the motorcycle corners leaning in a more pronounced manner, for example with a camber angle greater than about 30°.

The tyre 1 has, at the aforementioned central annular portion A, and possibly at the aforementioned first lateral annular portions B, a first curvature radius (corresponding to f in figure 1), preferably comprised between about 50 mm and about 70 mm, for example equal to about 65 mm.

Preferably, the tyre 1 has, at each of the second lateral annular portions S, a second curvature radius greater than the aforementioned first curvature radius. Preferably, the aforementioned second curvature radius is comprised between about 55 mm and about 85 mm, for example equal to about 75 mm.

In particular embodiments, the tyre 1 has the aforementioned second curvature radius in the first lateral annular portions B and in the axially inner areas of each of the second lateral annular portions S and a third curvature radius greater than the second curvature radius in the axially outer areas of each of the second lateral annular portions S. In this case, preferably, the aforementioned third curvature radius is comprised between about 60 mm and about 90 mm, for example equal to about 80 mm.

The central annular portion A is axially delimited by a pair of circumferential grooves 20 arranged on opposite sides with respect to the equatorial plane X-X and preferably extending without interruptions along the entire circumferential extension of the tyre 1. Such a central annular portion A has a constant axial width A1 along the circumferential extension of the tyre 1. The two circumferential grooves 20 are therefore parallel to one another.

The aforementioned axial width A1 is also comprised, preferably, between about 9% and about 15% of the length wt of the maximum cord of the tyre 1, more preferably between about 10% and about 14% of the length wt of the maximum cord of the tyre 1, even more preferably between about 11% and about 13% of the length wt of the maximum cord of the tyre 1, depending on the size and type of the tyre 1 and on the load which such a tyre 1 is subjected to.

For example, the axial width A1 is equal to about 12% of the length wt of the maximum cord of a tyre 1 of the type 120/70ZR17 subjected to a load equal to 200 Kg.

In particularly preferred embodiments, the aforementioned axial width A1 is lower than or equal to about 20 mm, preferably lower than or equal to about 18 mm, more preferably lower than or equal to about 16 mm, even more preferably lower than or equal to about 15 mm, for example equal to about 14.5 mm for a tyre 1 subjected to the load indicated above and having the dimensions indicated above.

Preferably, each of the circumferential grooves 20 has a width A2 comprised between about 2.5 mm and about 3.5 mm.

In particularly preferred embodiments, each of the aforementioned first lateral annular portions B has an axial width A3 comprised between about 5 mm and about 10 mm.

In order to obtain an optimal compromise between ground adherence, water drainage in wet road surface conditions and rigidity, and consequently an adequate response of the tyre during driving in a straight line and leaning, both the central annular portion A and the first lateral annular portions B have a void to rubber ratio substantially equal to zero, whereas the aforementioned second lateral annular portions S comprise a plurality of pairs of transversal grooves.

In the specific example illustrated in figures 1 and 2, both the central annular portion A and the lateral annular portions B are without grooves.

Again in the specific example illustrated in the attached figures, there are four pairs of transversal grooves 30, 31, 32, 33 arranged in the module T in sequence along the circumferential direction of the tyre 1 moving from the line t1 towards the line t2.

The grooves of each pair of grooves 30, 31, 32, 33 are arranged symmetrically with respect to the equatorial plane X-X, all of them being in an axially outer position with respect to the circumferential grooves 20.

Hereinafter the transversal grooves 30, 31, 32, 33 are described in more detail with reference to a single side of the tread band 8 with respect to the equatorial plane X-X. It is understood that what is described is also valid for the other side of the tread band 8.

All of the transversal grooves 30, 31, 32, 33 extend in the module T along respective broken lines defined by at least two differently inclined rectilinear segments, where each segment is inclined with respect to the equatorial plane X-X by a respective predetermined angle. However, it is possible to provide a number of segments different from those indicated below or even a single curvilinear segment.

In the specific example illustrated in the attached figures, the transversal grooves 30 and 32 are defined by three differently inclined rectilinear segments, whereas the transversal grooves 31 and 33 are defined by two differently inclined rectilinear segments.

The transversal groove 31 is circumferentially interposed between the transversal grooves 30 and 32, whereas the transversal groove 32 is circumferentially interposed between the transversal grooves 31 and 33.

In order to optimize the evacuation of water from the axially inner portion of the tread band 1 towards the opposite axially outer portions in wet road surface conditions, the single segments of the transversal grooves 30, 31, 32, 33 are inclined with respect to the equatorial plane X-X by respective angles whose the size increases progressively moving away from the equatorial plane X-X. In particular, each transversal groove 30, 31, 32, 33 has an axially inner segment having an angle of inclination with respect to the equatorial plane X-X smaller than that of the axially outer segment and the transversal grooves 30 and 32 have a segment axially interposed between the respective axially inner and axially outer segments (hereinafter said segment is indicated as "intermediate segment") that is inclined with respect to the equatorial plane X-X by an angle greater than that of the axially inner segment and smaller than that of the axially outer segment.

The transversal grooves 30, 31, 32, 33 have respective axially inner first ends 30a, 31a, 32a, 33a that are proximal to the equatorial plane X-X and respective axially outer second ends 30b, 31b, 32b, 33b that are distal from the equatorial plane X-X.

The first ends 30a, 31a, 32a, 33a of the transversal grooves 30, 31, 32, 33 are axially spaced apart from the circumferential grooves 20. In other words, the transversal grooves 30, 31, 32, 33 do not join to the circumferential grooves 20.

The first ends 30a, 31a, 32a of the transversal grooves 30, 31, 32 have the same axial distance from the equatorial plane X-X, whereas the first end 33a of the transversal groove 33 is arranged at an axial distance from the equatorial plane X-X greater than that of the first ends 30a, 31a, 32a of the transversal grooves 30, 31, 32.

The axial distance d of the first ends 30a, 31a, 32a of the transversal grooves 30, 31, 32 from the equatorial plane X-X is equal to the sum of the axial width A3 of each of the first lateral annular portions B, of the width A2 of each circumferential groove 20 and of half the axial width A1 of the central annular portion A.

The second end 30b of the transversal groove 30 has the same axial distance from the equatorial plane X-X of the second end 32b of the transversal groove 32, whereas the second end 31b of the transversal groove 31 has the same axial distance from the equatorial plane X-X of the second end 33b of the transversal groove 33, the latter distance being lower than that of the second ends 30b, 32b.

Again in order to optimize the evacuation of water, the circumferential size of each transversal groove 30, 31, 32, 33 increases moving from the respective first end 30a, 31a, 32a, 33a towards the respective second end 30b, 31b, 32b, 33b. In particular, in the embodiment illustrated herein:
- the axially inner segment and the axially outer segment of each of the transversal grooves 30 and 32 have a continuously increasing circumferential size moving progressively away from the equatorial plane X-X, whereas the intermediate segment has a substantially constant circumferential segment moving progressively away from the equatorial plane X-X;
- the two segments of each of the transversal grooves 31 and 33 both have a continuously increasing circumferential size moving progressively away from the equatorial plane X-X.

However, it is possible to foreseen alternative embodiments in which the intermediate segment of the transversal grooves 30 and 32 also has a continuously increasing circumferential size moving progressively away from the equatorial plane X-X and/or in which at least one of the axially inner and axially outer segments of the transversal grooves 30 and 32 or of the two segments of the transversal grooves 31 and 33 have a substantially constant circumferential size moving progressively away from the equatorial plane X-X.

The module T also comprises a pair of secondary grooves 40 arranged on opposite sides with respect to the equatorial plane X-X, in an axially outer position with respect to the pair of first lateral annular portions B and circumferentially offset with respect to the transversal grooves 30, 31, 32, 33.

Such secondary grooves 40 are described hereinafter with reference to only one side of the tread band 8 with respect to the equatorial plane X-X. It is understood that what is described is also valid for the other side of the tread band 8.

The secondary groove 40 has a first end 40a proximal to the equatorial plane X-X and circumferentially facing towards the transversal grooves 30, 31, 32, 33 and a second end 40b distal from the equatorial plane X-X and circumferentially facing the opposite way with respect to the transversal grooves 30, 31, 32, 33. Therefore, the first ends 40a of the grooves of the aforementioned pair of secondary grooves 40 are separated from one another by a first axial segment 40a1 and the second ends 40b of the grooves of the aforementioned pair of secondary grooves 40 are separated from one another by a second axial segment 40b1 having a size greater than that of the first axial segment 40a1.

The size of the aforementioned first axial segment 40a1 is substantially equal to the distance D1 between the first ends 30a, 31a, 32a of the grooves of the three pairs of transversal grooves 30, 31, 32, whereas the size of the second axial segment 40b1 is lower than the distance D2 between the first ends 33a of the grooves of the pair of grooves 33 that is, in the module T, in a position closer to the grooves 40.

Considering the direction of rotation R of the tyre 1 indicated in figure 2, the first end 40a of the secondary groove 40 enters into the footprint F of the tyre 1 before the second end 40b of the secondary groove 40.

The first end 40a of the secondary groove 40 can be substantially axially aligned to, or slightly circumferentially offset with respect to, the first end 33a of the transversal groove 33.

### TESTS

### Outdoor tests

The Applicant carried out a series of outdoor comparative tests by comparing a reference front tyre provided with beads without the aforementioned reinforcing element and a tyre in accordance with the invention that differed from the reference tyre only for the provision in the beads of the aforementioned reinforcing element. The reference tyre is a tyre appreciated by customers for its good behavior on dry and wet road surfaces in terms of maneuverability and braking.

The tests were carried out with the tyre being partially worn, after 5000 km of travel. Indeed, this is a condition in which typically the deterioration of the dynamic features caused by the increase in flexibility of the tread band due to the consumption of the compound of the tread band begins to be perceptible to the user.

The tyres were mounted on a Sport Touring motorcycle, in particular a KAWASAKI VERSYS^{™} 1000. Such a motorcycle has been always equipped with the same model of rear tyre. The model of the front tyres was 120/70ZR17, whereas that of the rear tyres was 180/55ZR17.

The inflation pressure of the front tyres was equal to 2.5 bar, whereas that of the rear tyres was equal to 2.9 bar.

The result of one of the comparative tests is given in Table 2 below, where INV indicates the front tyre of the invention and RIF indicates the reference front tyre. Such a result was validated by carrying out a further comparative test with a new set of front and rear tyres of the type described above. In Table 2, the symbol "=" indicates the mark, considered good or excellent, obtained with the reference tyre and the symbol "+" indicates an improvement with respect to the reference tyre.

**TABLE 2**

| | **INV** | **RIF** |
|---|---|---|
| SHIMMY EFFECT F (damping of the vibration of the handlebars after and impact, in a cold condition) | + | = |
| SHIMMY EFFECT C (damping of the vibration of the handlebars after and impact, in a hot condition) | + | = |
| DANGLING (maintaining lean at low speed) | + | = |
| **STABILITY OF TRAVEL IN STRAIGHT LINE** | **INV** | **RIF** |
| STABILITY IN ACCELERATION | + | = |
| STABILITY IN STATIONARY SPEED >140 Km/h | + | = |
| **STABILITY OF CORNERING** | **INV** | **RIF** |
| STABILITY IN ACCELERATION | + | = |
| STABILITY IN STATIONARY SPEED | + | = |
| **SUBJECTIVE CHARACTERIZATION** | **INV** | **RIF** |
| FRONT RIGIDITY | + | = |
| **DRIVING FUNDAMENTALS** | **INV** | **RIF** |
| RESPONSE | + | = |
| DRIVING WEIGHT WITH LOW ENGAGEMENT (soft) | + | = |
| DRIVING WEIGHT WITH HIGH ENGAGEMENT (hard handling) | + | = |
| DRIVING HOMOGENEITY | + | = |
| WARM UP | = | = |
| ADHERENCE | = | = |
| CONTROL OF MOTORCYCLE AFTER PASSING AN OBSTACLE ON A BEND | + | = |
| RECOVERY MANEUVERS | + | = |
| UNDERSTEER | + | = |

Table 2 highlights how the tyre 1 of the invention offered improved results with respect to the already good results of the reference tyre in all the items related to the stability and drivability of the tyre, without highlighting any worsening in the other items.

### Indoor tests

The Applicant also carried out a series of indoor comparative tests by comparing a reference front tyre of the same type used in the outdoor test and a tyre in accordance with the invention of the same type used in the outdoor test.

Such indoor tests were carried out with the aim of evaluating the dynamic behavior of the tyre; in particular, the relaxation length and the drift rigidity were measured when changing the load on the tyre.

The indoor tests were carried out by a MTS Flat-Trac^{®} device, known to be a reliable and accurate device for applying forces and torques to a tyre rolling on a flat drum.

The result of the tests is shown in Table 3 below.

Also in this case, INV indicates the front tyre of the invention and RIF indicates the reference front tyre.

In Table 3, the symbol "=" indicates the value measured for the reference tyre and the symbol "+" indicates that the value measured for the tyre of the invention is deemed better. In particular, with reference to the relaxation length, a value is deemed better than the reference one if such a value is lower than the reference one.

**TABLE 3**

| | **Relaxation length** | | **Drift rigidity** | |
|---|---|---|---|---|
| **Load (kg)** | **INV** | **RIF** | **INV** | **RIF** |
| 75 | + | = | = | = |
| 112,5 | = | = | = | = |
| 150 | = | = | = | = |
| 225 | = | = | = | = |

Table 3 shows that the provision of the aforementioned reinforcing element in the beads of the tyre of the invention results at low loads in a reduction of the relaxation length with respect to that of the reference tyre, whereas at medium and high loads the relaxation length remains substantially equal to that of the reference tyre. All of this without any significant change in the drift rigidity.

A reduction of the relaxation length at low loads is deemed by the Applicant to be particularly advantageous in terms of drivability and stability of the tyre due to the fact that the typical travel condition for a front tyre of the Sport Touring type is indeed the one at low load. In fact, for a front tyre such a travel condition is the one occurring when travelling at high speed without the need for braking, as for example happens in the case of routes having long straight parts, like for example on motorways. In such travel conditions, indeed, the front tyre tends to lift from the road surface because of the aerodynamic resistance.

The fact that the drift rigidity remains substantially equal to that of the reference tyre in all load conditions confirms that the aforementioned advantages achieved by the tyre of the invention in terms of drivability and stability (demonstrated by the reduction of the relaxation length) are obtained without altering other dynamic features of the tyre, and therefore without leading to any worsening of performance.

Of course, those skilled in the art can bring further modifications and variants to the tyre 1 described above in order to satisfy specific and contingent application requirements, said variants and modifications being in any case within the scope of protection as defined by the following claims.

## Claims

1. Motorcycle wheel tyre (1), comprising:
- a carcass structure (2) comprising at least one carcass ply (3) having opposite end edges (3a) associated with respective annular reinforcing structures (4) to form respective beads (15);
- a belt structure (6) arranged in a radially outer position with respect to the carcass structure (2);
- a tread band (8) arranged in a radially outer position with respect to the belt structure and comprising, in an axially inner annular portion (A1) thereof, a pair of circumferential grooves (20) arranged on opposite sides with respect to an equatorial plane (X-X) of the tyre (1);
wherein each bead (15) comprises at least one reinforcing element (18) comprising an elastomeric material and having a rigidity in a circumferential direction greater than the rigidity in a radial direction, said at least one reinforcing element (18) further comprising a plurality of reinforcing fibers oriented along said circumferential direction;
**characterised in that** said reinforcing fibers have nanometric dimensions lower than 500 nm.

2. Tyre (1) according to claim 1, wherein the ratio between said rigidity in the circumferential direction and said rigidity in the radial direction is greater than 10%, preferably greater than 15%, more preferably greater than 20%.

3. Tyre (1) according to claim 1 or 2, wherein the ratio between said rigidity in the circumferential direction and said rigidity in the radial direction is lower than 80%, preferably lower than 70%, more preferably lower than 60%, even more preferably lower than 50%.

4. Tyre (1) according to any one of the previous claims, wherein said reinforcing fibers comprise inorganic fibers of magnesium and/or aluminium and/or calcium silicates, and/or mixtures thereof.

5. Tyre (1) according to any one of the previous claims, wherein said at least one reinforcing element (18) is arranged at least in an axially outer position with respect to the respective annular reinforcing structure (4).

6. Tyre (1) according to claim 5, wherein said at least one reinforcing element (18) extends radially up to or close to said tread band (8).

7. Tyre (1) according to claim 5 or 6, wherein said at least one reinforcing element (18) extends from said axially outer position to an axially inner position with respect to said respective annular reinforcing structure (4).

8. Tyre (1) according to any one of claims 5 to 7, wherein said at least one reinforcing element (18) at least partially wraps said respective annular reinforcing structure (4).

9. Tyre (1) according to any one of claims 5 to 8, wherein said at least one reinforcing element (18) is arranged at least in an axially outer position corresponding to a first portion of bead (15) configured to be coupled to a rim of a wheel.

10. Tyre (1) according to claim 9, wherein said at least one reinforcing element (18) extends from said axially outer position to an axially inner position corresponding to a second portion of bead (15) configured to be coupled to the rim of the wheel, defining an anti-abrasion element at the bead (15).

11. Tyre (1) according to any one of the previous claims, wherein said tread band (8) comprises a plurality of grooves (20, 31, 32, 33, 40) forming a tread pattern which includes a module (T) replicated along said circumferential direction and having a predetermined circumferential length (C1), wherein said circumferential grooves (20) extend in said module (T) along said circumferential direction for at least part of said predetermined circumferential length (C1) and define between them a central annular portion (A) of tread band (8) having a void to rubber ratio substantially equal to zero.

12. Tyre (1) according to claim 11, wherein each groove (20) of said pair of circumferential grooves (20) extends without interruptions along said circumferential direction.

## Patentansprüche

1. Radreifen (1) für Motorrad, umfassend:
- eine Karkassenstruktur (2), die mindestens eine Karkassenlage (3) umfasst, die gegenüberliegende Endkanten (3a) aufweist, die mit jeweiligen ringförmigen Verstärkungsstrukturen (4) verbunden sind, um jeweilige Wulste (15) zu bilden;
- eine Gürtelstruktur (6), die in einer radial äußeren Position in Bezug auf die Karkassenstruktur (2) angeordnet ist;
- ein Laufflächenband (8), das in einer radial äußeren Position in Bezug auf die Gürtelstruktur positioniert ist und in einem axial inneren ringförmigen Abschnitt (A1) davon ein Paar von Umfangsrillen umfasst, das auf gegenüberliegenden Seiten in Bezug auf eine Äquatorebene (X-X) des Reifens (1) angeordnet ist;
wobei jeder Wulst (15) mindestens ein Verstärkungselement (18) umfasst, das ein Elastomermaterial umfasst und eine Steifigkeit in einer Umfangsrichtung aufweist, die größer als die Steifigkeit in einer radialen Richtung ist, wobei das mindestens eine Verstärkungselement (18) ferner eine Mehrzahl von Verstärkungsfasern umfasst, die entlang der Umfangsrichtung ausgerichtet ist;
**dadurch gekennzeichnet, dass** die Verstärkungsfasern nanometrische Abmessungen unter 500 nm aufweisen.

2. Reifen (1) nach Anspruch 1, wobei das Verhältnis zwischen der Steifigkeit in der Umfangsrichtung und der Steifigkeit in der radialen Richtung größer als 10 %, vorzugsweise größer als 15 %, bevorzugter größer als 20 % ist.

3. Reifen (1) nach Anspruch 1 oder 2, wobei das Verhältnis zwischen der Steifigkeit in der Umfangsrichtung und der Steifigkeit in der radialen Richtung niedriger als 80 %, vorzugsweise niedriger als 70 %, bevorzugter niedriger als 60 % und noch bevorzugter niedriger als 50 % ist.

4. Reifen (1) nach einem der vorhergehenden Ansprüche, wobei die Verstärkungsfasern anorganische Fasern aus Magnesium- und/oder Aluminium- und/oder Kalziumsilikaten und/oder Mischungen davon umfassen.

5. Reifen (1) nach einem der vorhergehenden Ansprüche, wobei das mindestens eine Verstärkungselement (18) zumindest in einer axial äußeren Position in Bezug auf die jeweilige ringförmige Verstärkungsstruktur (4) angeordnet ist.

6. Reigen (1) nach Anspruch 5, wobei sich das mindestens eine Verstärkungselement (18) radial bis oder nahe zum Laufflächenband (8) erstreckt.

7. Reifen (1) nach Anspruch 5 oder 6, wobei sich das mindestens eine Verstärkungselement (18) von der axial äußeren Position zu einer axial inneren Position in Bezug auf die jeweilige ringförmige Verstärkungsstruktur (4) erstreckt.

8. Reifen (1) nach einem der Ansprüche 5 bis 7, wobei das mindestens eine Verstärkungselement (18) die jeweilige ringförmige Verstärkungsstruktur (4) zumindest teilweise umhüllt.

9. Reifen (1) nach einem der Ansprüche 5 bis 8, wobei das mindestens eine Verstärkungselement (18) zumindest in einer axial äußeren Position angeordnet ist, die einem ersten Abschnitt des Wulsts (15) entspricht, der dazu ausgelegt ist, an eine Felge eines Rades gekoppelt zu werden.

10. Reifen (1) nach Anspruch 9, wobei sich das mindestens eine Verstärkungselement (18) von der axial äußeren Position zu einer axial inneren Position erstreckt, die einem zweiten Abschnitt des Wulsts (15) entspricht, der dazu ausgelegt ist, an die Felge des Rades gekoppelt zu werden, und ein Anti-Abrieb-Element am Wulst (15) definiert.

11. Reifen (1) nach einem der vorhergehenden Ansprüche, wobei das Laufflächenband (8) eine Mehrzahl von Rillen (20, 31, 32, 33, 40) umfasst, die ein Laufflächenmuster bildet, das ein Modul (T) umfasst, das sich entlang der Umfangsrichtung wiederholt und eine vorbestimmte Umfangslänge (C1) aufweist, wobei die Umfangsrillen (20) sich in dem Modul (T) für zumindest einen Teil der vorbestimmten Umfangslänge (C1) entlang der Umfangsrichtung erstrecken und einen zentralen ringförmigen Abschnitt (A) des Laufflächenbandes (8) zwischen ihnen definieren, der ein Hohlraum-zu-Gummi-Verhältnis im Wesentlichen gleich null definiert.

12. Reifen (1) nach Anspruch 11, wobei sich jede Rille (20) des Paares von Umfangsrillen (20) ohne Unterbrechungen entlang der Umfangsrichtung erstreckt.

## Revendications

1. Pneu de roue de motocyclette (1), comprenant :
- une structure de carcasse (2) comprenant au moins un pli de carcasse (3) présentant des bords d'extrémité opposés (3a) associés à des structures de renforcement annulaires respectives (4) pour former des bourrelets respectifs (15) ;
- une structure de ceinture (6) agencée dans une position radialement extérieure par rapport à la structure de carcasse (2) ;
- une bande de roulement (8) agencée dans une position radialement extérieure par rapport à la structure de ceinture et comprenant, dans une partie annulaire axialement intérieure (A 1) de celle-ci, une paire de rainures circonférentielles (20) agencées sur des côtés opposés par rapport à un plan équatorial (X-X) du pneu (1) ;
dans lequel chaque bourrelet (15) comprend au moins un élément de renforcement (18) comprenant un matériau élastomère et présentant une rigidité dans une direction circonférentielle supérieure à la rigidité dans une direction radiale, ledit au moins un élément de renforcement (18) comprenant en outre une pluralité de fibres de renforcement orientées le long de ladite direction circonférentielle ;
**caractérisé en ce que** lesdites fibres de renforcement présentent des dimensions nanométriques inférieures à 500 nm.

2. Pneu (1) selon la revendication 1, dans lequel le rapport entre ladite rigidité dans la direction circonférentielle et ladite rigidité dans la direction radiale est supérieur à 10%, de préférence supérieur à 15%, plus préférentiellement supérieur à 20%.

3. Pneu (1) selon la revendication 1 ou 2, dans lequel le rapport entre ladite rigidité dans la direction circonférentielle et ladite rigidité dans la direction radiale est inférieur à 80%, de préférence inférieur à 70%, plus préférentiellement inférieur à 60%, encore plus préférentiellement inférieur à 50 %.

4. Pneu (1) selon l'une quelconque des revendications précédentes, dans lequel lesdites fibres de renforcement comprennent des fibres inorganiques de silicates de magnésium et/ou d'aluminium et/ou de calcium, et/ou leurs mélanges.

5. Pneu (1) selon l'une quelconque des revendications précédentes, dans lequel ledit au moins un élément de renforcement (18) est agencé au moins dans une position axialement extérieure par rapport à la structure de renforcement annulaire respective (4).

6. Pneu (1) selon la revendication 5, dans lequel ledit au moins un élément de renforcement (18) s'étend radialement jusqu'à ou à proximité de ladite bande de roulement (8).

7. Pneu (1) selon la revendication 5 ou 6, dans lequel ledit au moins un élément de renforcement (18) s'étend depuis ladite position axialement extérieure jusqu'à une position axialement intérieure par rapport à ladite structure de renforcement annulaire respective (4).

8. Pneu (1) selon l'une quelconque des revendications 5 à 7, dans lequel ledit au moins un élément de renforcement (18) enveloppe au moins partiellement ladite structure de renforcement annulaire respective (4).

9. Pneu (1) selon l'une quelconque des revendications 5 à 8, dans lequel ledit au moins un élément de renforcement (18) est agencé au moins dans une position axialement extérieure correspondant à une première partie du bourrelet (15) configurée pour être couplée à une jante d'une roue.

10. Pneu (1) selon la revendication 9, dans lequel ledit au moins un élément de renforcement (18) s'étend depuis ladite position axialement extérieure jusqu'à une position axialement intérieure correspondant à une deuxième partie du bourrelet (15) configurée pour être couplée à la jante de la roue, définissant un élément anti-abrasion au niveau du bourrelet (15).

11. Pneu (1) selon l'une quelconque des revendications précédentes, dans lequel ladite bande de roulement (8) comprend une pluralité de rainures (20, 31, 32, 33, 40) formant une sculpture qui inclut un module (T) répliqué le long de ladite direction circonférentielle et présentant une longueur circonférentielle prédéterminée (C1), dans lequel lesdites rainures circonférentielles (20) s'étendent dans ledit module (T) le long de ladite direction circonférentielle sur au moins une partie de ladite longueur circonférentielle prédéterminée (C1) et définissent entre elles une partie annulaire centrale (A) de la bande de roulement (8) présentant un rapport vide sur caoutchouc sensiblement égal à zéro.

12. Pneu (1) selon la revendication 11, dans lequel chaque rainure (20) de ladite paire de rainures circonférentielles (20) s'étend sans interruptions le long de ladite direction circonférentielle.
